# EUROPEAN PATENT SPECIFICATION

(11) **EP 2 612 209 B1**
(45) Date of publication and mention of the grant of the patent: **29.08.2018**
(21) Application number: 11773664.5
(22) Date of filing: 30.08.2011
(51) Int. Cl.: G05D 7/06, F16K 31/04

(54) **A VALVE SYSTEM**
VENTILSYSTEM
SYSTÈME DE VALVES

(30) Priority: 08.09.2010 US 380864 P; 01.09.2010 DK 201070380
(43) Date of publication of application: 10.07.2013
(73) Proprietor: FlowCon International ApS, 4200 Slagelse (DK)
(72) Inventor: IBSEN, Bjarne Wittendorff, Palm Jumeirah, Dubai (AE); BØJGAARD, Mille Sveje, DK-2100 Copenhagen Ø (DK); PEDERSEN, Gitte, DK-5210 Odense NV (DK)
(74) Representative: Nordic Patent Service A/S
(86) International application number: PCT/DK2011/050329
(87) International publication number: WO 2012/028153

(56) References cited:
- EP-A2- 1 223 373
- WO-A1-95/17622
- US-A- 6 032 924
- US-A1- 2004 256 586
- US-B1- 6 748 967

## Description

The invention relates to a valve system, in particular for controlling the liquid flow in a plant for central heating, which system comprises one or more valve bodies, wherein an insert can be arranged that has specific flow characteristics, said insert comprising two types of units with regulable openings, said units being provided with means for regulating the liquid flow, an applied change in the area of the openings of the one unit bringing about a change in the differential pressure over the openings of that unit, whereby the area of the openings of the other unit is changed in response thereto, said insert being furthermore provided with means for the applied change in area by means of an activator that comprises an end which is exposed to the surroundings.

EP 1223373 discloses a motor operated valve with spring return type valve including a valve having a valve shaft to be operated rotationally for controlling the flow rate of fluid flowing through a fluid channel; an actuator having an output shaft rotated by an electric motor; a spring unit having a rotating shaft for transmitting the rotational power of the actuator output shaft to the valve shaft and a return spring for giving the rotating shaft a rotational power in one direction; and a yoke, for the actuator and the spring unit to be detachably mounted on. The electric actuator is controlled by an external signals that dictates the position of the electric actuator and thus the position of the valve shaft.

WO 95/17622 teaches a valve for maintaining a constant liquid flow in a heating or cooling plant. That valve can be combined with a control unit, but today, during installation, the operator must convert the desired design flow into a setting of the control unit or the valve. That is a time-consuming process which involves a high risk of errors, both inasmuch as the conversion and the accuracy of the setting are concerned. That may entail that the liquid flow in the plant is not regulated optimally - with an ensuing probable loss of energy.

It is an object of the invention to provide a system whereby those drawbacks are minimised.

That is obtained by the valve system according to claim 1.

Embodiments of the invention are set forth in the dependent claims.

### List of figures

In the following an embodiment of the invention will be explained with reference to the figures, wherein
Figure 1 shows a schematic drawing of the constituent functions in one embodiment of a valve system according to the invention;
Figure 2 shows a section of an embodiment of a valve system according to the invention;
Figure 3 shows an "exploded view" of an embodiment of a valve system according to the invention.

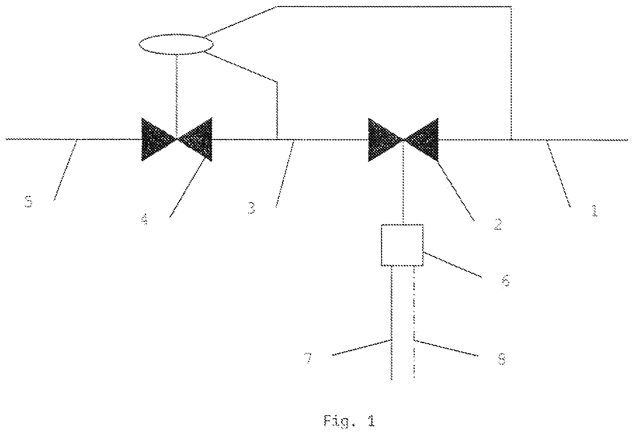

Figure 1 shows which constituent functions are present in the valve system. The gathering of those constituent functions into one single valve system (a valve body with an insert within and a control unit mounted thereon) saves space.

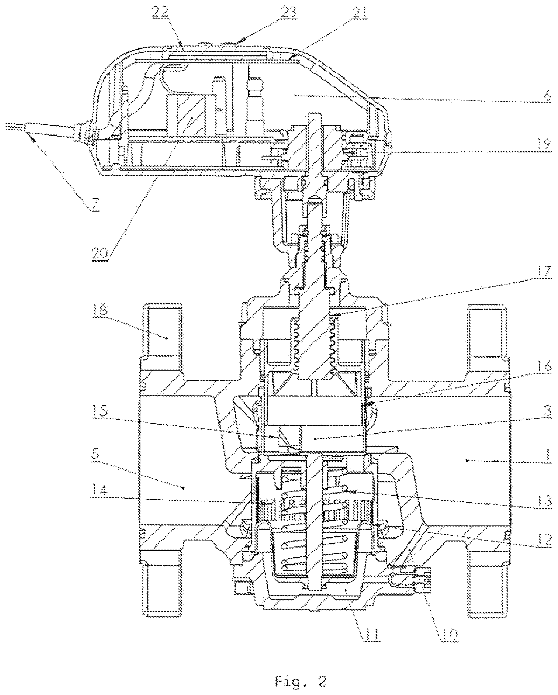

Figure 2 shows an embodiment of a valve system for controlling the liquid flow in a plant for central heating. The system comprises one or more valve bodies 18, wherein an insert can be arranged that has specific flow characteristics. The insert comprises a regulator part and a differential-pressure part, each of which has regulable openings 14, 15. An applied change in the area of the openings 15 of the regulator unit brings about a change in the differential pressure over them, whereby the area of the openings 14 of the other unit (the differential-pressure part) is changed in response thereto. The insert is furthermore provided with means for the applied change in area by means of an activator 17 that comprises an end exposed to the surroundings.

The valve system comprises a programmable regulator unit 6 provided with motor and comprising coupling means 50 adapted to complementary coupling means 51 on the valve bodies to the effect that the motor of the regulator unit can be coupled to the end of the activator 17 on the insert. The regulator unit is programmed such that, depending on the flow characteristics of the insert, the regulator unit is capable of regulating the activator 17 and hence the liquid flow through the valve body coupled to the regulator unit.

The valve as such (the valve body with the insert) is a so-called differential-pressure-independent regulator valve that comprises two sub-functions, viz a so-called differential-pressure part 4 and a regulator part 2. The valve is coupled to an electronic control unit 6 (also referred to as programmable regulator unit 6) controlling the opening area over the regulator part 2, while the differential pressure is controlled by the above-mentioned differential-pressure part 4. The electronic control unit 6 is capable of communicating with a unit outside the valve system via an input 7 and an output 8.

In the configuration shown in figure 2, the regulator part comprises a number of openings 15 with associated closing device 16 and an activator 17, while the differential-pressure part comprises other openings 14, a spring 13, and a diaphragm 12.

The liquid to be regulated by the valve enters via the inlet 1 and proceeds through the openings 15, and from there the liquid runs through an internal chamber 3 and out through the openings 14 of the differential-pressure part - to finally leave the valve via the outlet 5.

In the shown embodiment, the control unit 6 is applied to the top of the valve and it is provided with a motor 20 which, via a gear 19, is capable of influencing the activator 17 which, via the closing device 16, is capable of controlling the opening area of the openings 15 of the regulator part.

The pressure from the inlet 1 propagates through the passage 10 to a lower chamber 11 and presses on the underside of the diaphragm. The diaphragm can be shifted across the openings 14 and thereby it may, along with the spring 13, jointly and automatically, regulate the pressure in the internal chamber 3, the area above the openings of the differential-pressure part being changed to the effect that the differential pressure over the openings 15 of the regulator part depends on the area of the openings 14 in the differential-pressure unit.

The control unit 6 controls the area of the openings 15 of the regulator part. The control unit is programmed such that it knows or calculates the associated differential pressure over same and, by means of ia that parameter, it may also calculate the flow through the plant. In a heating system with several strings, it may often be necessary to restrict the maximal flow through the individual strings to the effect that, at any time, one can make sure that the flow does not - exclusively - run in one single string. Such maximal flow value may be entered into the control unit by means of an input which may eg be a keyboard 23. Furthermore, the regulator unit is, in the figures, configured with a PCB board 21 and a screen or display 22 capable of showing various operation parameters such as current flow, temperature or the like. Of course, the screen may also be used in connection with the display of parameters in connection with the programming of the regulator unit.

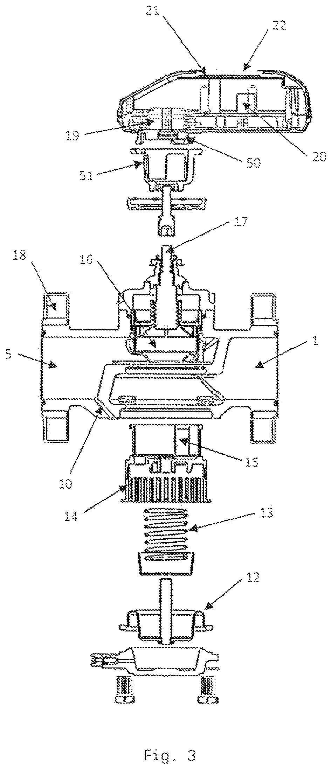

Figure 3 shows more clearly how the openings 15 of the regulator unit as such are regulated by means of a cup-like/closing device part 16 that can be moved up or down by means of the control unit's motor and hence change the opening area of the openings 15.

The control unit can be made with a coupling part comprising three legs arranged about the shaft that is to transfer the rotation between regulator part and valve body. Those three legs are introduced by interconnection in three complementary holes in a coupling part on the valve body. That configuration ensures that the regulator unit cannot rotate relative to the valve body. From the manufacturer's, a "locking ring" is clicked onto the coupling part of the valve body. By turning, the locking ring is capable of engaging with other complementary locking means on the regulator part and hence locks the latter axially. Moreover, the locking mechanism is configured with a click mechanism which is activated when regulator unit and valve body are interconnected. Consequently, when an operator is thus to apply the regulator unit to the valve body, he/she is merely to introduce the legs and then turn the ring until he/she hears a click. Of course, the number of legs can be another number, such as 2 or 4, or an entirely different number. This is because, as mentioned above, it is the purpose of legs and holes to prevent a rotation between regulator part and valve body. It will likewise be obvious to the person skilled in the art that, instead of configuring the regulator part with legs that engage into complementary holes in the valve body, one may provide a "negative system", wherein the valve body is configured with legs that engage with complementary holes in the regulator unit which is then also configured with a locking ring.

The control unit can be programmed such that it is capable of operating different valves which may, in turn, have different inserts.

According to one embodiment of the invention, a maximum and/or minimum value for the liquid throughput can be set in the control unit to the effect that the field of operation of the valve system is delimited.

According to one embodiment, the control unit automatically calibrates itself in accordance with the valve, the control unit registering the closing point of the valve and uses it as a starting point for the field of operation of the valve.

In case of a malfunction where the control unit is eg incapable of moving the closing device 16, it is recorded as a malfunction shown on the screen following which the control unit - at suitable intervals - repeats its attempt to move the closing device.

The purpose of this is to avoid that periodical malfunctions result in permanent breakdowns of the system, but merely hinder the functionality during the period when the malfunction occurs.

According to one embodiment, the control unit divides malfunctions into two levels - a warning about possible problems and an alarm regarding critical system failure.

According to one embodiment of the invention, certain programming options and/or data can be protected by a password which may be activated or deactivated by the operator. According to one embodiment, a certain amount of detailed data are always protected by a particular password to the effect that only advanced users have access to them. Such detailed data may eg contain the total number of malfunctions.

According to one embodiment, certain data are always available on the screen of the control unit by a push being applied to the keys of the keyboard. Such data be eg be selected settings and current values.
According to one embodiment, the control unit is moreover provided with a temperature sensor. Thereby it can be provided with a safety device that disconnects the power to the electronics or parts thereof if the temperature in the control unit exceeds a defined value.

According to one embodiment of the invention, the control unit is provided with an independent power supply to the effect that the control unit is capable of performing an action in case of power failure, such as closing the valve. One way of doing so is by providing the control unit with one or more batteries that are continuously charged and used during power failures, if any. However, it could also be accomplished by means of capacitors.

Since the control unit is programmed to be able to operate several different valves, the operator who is to replace a control unit needs to bring along only one type of unit.

According to one embodiment, the control unit may be provided with a suitable interface, such as a keyboard of wireless communication means to the effect that an operator is capable of setting the control unit in accordance with the valve type in question and the need of the plant.

One way of doing so is by providing the valve with an identification number which is merely to be entered by the operator via the interface of the control unit. However, that could also be accomplished by the control unit, by interconnection with the valve/the insert, automatically identifying it and adjusting accordingly. According to one embodiment, this is accomplished entirely mechanically, but it could also be accomplished by providing the control unit and the valve/the insert with a wireless communications system based on eg RFID (Radio Frequency Identification) which is an automated identification method working by saving and remote-receiving data by use of devices called RFID-tags or transponders.
According to one embodiment, the movement between the control unit and valve is transferred entirely magnetically.

According to one embodiment, the valve system comprises measurement terminals to the effect that pressure and/or temperature in the system can be measured from the outside.

According to one embodiment, the passage 10 in which the inlet pressure propagates to the lower chamber 11 is provided with a screw which is accessible from the outside and by which the operator is capable of increasing or reducing the throughput area of the passage. Hereby the speed at which pressure changes propagate to the underside of the diaphragm is regulated/braked whereby the movements of the diaphragm are reduced or increased in response to current needs.

## Claims

1. A valve system, in particular for controlling the liquid flow in a plant for central heating, which system comprises: one or more programmable regulator units (6), valve bodies (18) and various inserts with different flow characteristics,
said valve bodies (18) are provided with one of said various inserts, said one insert concerned having specific flow characteristics,
said various inserts comprising two types of units with regulable openings (14,15), said units being provided with means for regulating the liquid flow, an applied change in the area of the openings of the one unit bringing about a change in the differential pressure over the openings of that unit, whereby the area of the openings of the other unit is changed in response thereto, said various inserts being furthermore provided with means for the applied change in area by means of an activator (17) that comprises an end which is exposed to the surroundings,
said one or more programmable regulator units being provided with a motor (20) and comprising coupling means (50) adapted to complementary coupling means (51) on the valve bodies (18) to the effect that the motor (20) of the one or more programmable regulator units (6) is coupled to the end of the activator (17) on the insert concerned, said one or more programmable regulator (6) units (6) being programmed to regulate the activator (17) depending on and in accordance with the specific flow characteristics of said one insert concerned and hence the liquid flow through the valve body coupled to the programmable regulator unit (6).

2. A valve system according to claim 1, **characterised in that** the system comprises means for measuring the position of the activator (17) and a unit for processing data configured for estimating the liquid flow through the valve based on the position of the activator (17).

3. A valve system according to claims 1 or 2, **characterised in that** the programmable regulator unit (6) is capable of influencing the activator (17) at several different speeds depending on the magnitude of the distance it is to travel.

4. A valve system according to claims 1 to 3, **characterised in that** the system comprises means for measuring the power consumption in the motor (20) and a unit for processing data configured to estimate the force or the momentum by which the activator (17) is influenced.

5. A valve system according to claim 4, **characterised in that** the programmable regulator unit (6) estimates the momentum on the basis of the power consumption in the motor (20).

6. A valve system according to claim 5, **characterised in that** the system comprises a switch causing the motor (20) to stop when the force or the momentum in the activator (17) is estimated to exceed a maximum value stored in the memory of the programmable regulator unit (6).

7. A valve system according to claims 1 to 5, **characterised in that** the system comprises means for measuring the temperature in the programmable regulator unit; and **in that** the system comprises a switch that turns off when the temperature is outside a range stored in the memory of the programmable regulator unit (6).

8. A valve system according to claims 1 to 7, **characterised in that** a part of the memory of the programmable regulator (6) unit is stored on an electrically independent unit so that data are stored and accumulated.

9. A valve system according to claims 1 to 8, **characterised in** comprising an interface to the effect that the programmable regulator unit (6) can be programmed via same.

10. A valve system according to claims 1 to 9, **characterised in that** the programmable regulator unit (6) comprises an interface in the form of an RFID system or an infrared system, wherein a tag arranged in association with an insert or a valve body (18) is detected by an antenna part arranged in association with the programmable regulator unit (6), whereby the programmable regulator unit (6) is automatically adjusted to the coupled insert.

11. A valve system according to claims 1 to 10, **characterised in that** the valve body (18) comprises a coupling part (51) with associated identification means; and **in that** the programmable regulator part (6) comprises means capable of reading the identification means, whereby the programmable regulator unit (6) is automatically adjusted to the coupled insert.

12. A valve system according to claim 11, **characterised in that** the programmable regulator unit (6) and the valve body (18) can be interconnected via a so-called snap-coupling; and that the identification takes place by mechanical detection of when the parts are being interconnected or have been interconnected.

## Patentansprüche

1. Ventilsystem, insbesondere zum Steuern des Flüssigkeitsstroms in einer Anlage zur zentralen Heizung, wobei dieses System umfasst: eine oder mehr programmierbare Reglereinheiten (6), Ventilkörper (18) und verschiedene Einsätze mit unterschiedlichen Strömungscharakteristiken, die Ventilkörper (18) sind mit einem der verschiedenen Einsätze versehen, wobei der eine betroffene Einsatz spezifische Strömungscharakteristiken hat, wobei die verschiedenen Einsätze zwei Arten von Einheiten mit regulierbaren Öffnungen (14, 15) umfassen, wobei die Einheiten mit Mitteln zum Regeln des Flüssigkeitsstroms versehen sind, wobei eine vorgenommene Änderung in der Fläche der Öffnungen der einen Einheit eine Änderung im Differentialdruck über den Öffnungen dieser Einheit herbeiführt, wodurch die Fläche der Öffnungen der anderen Einheit als Reaktion darauf geändert wird, wobei die verschiedenen Einsätze des Weiteren mit Mitteln für die angewendete Flächenänderung mittels eines Aktivators (17) versehen sind, der ein Ende hat, das der Umgebung ausgesetzt ist,
wobei die eine oder mehr programmierbaren Reglereinheiten mit einem Motor (20) versehen sind und Verbindungsmittel (50) enthalten, die an komplementäre Verbindungsmittel (51) an den Ventilkörpern (18) angepasst sind, mit dem Effekt, dass der Motor (20) der einen oder mehreren programmierbaren Reglereinheiten (6) mit dem Ende des Aktivators (17) auf dem betreffenden Einsatz verbunden ist, wobei der eine oder die mehreren programmierbaren Reglereinheiten (6) zum Regeln des Aktivators (17) programmiert sind, je nach und gemäß den spezifischen Strömungscharakteristiken des einen betreffenden Einsatzes und daher des Flüssigkeitsstroms durch den Ventilkörper, der mit der programmierbaren Reglereinheit (6) verbunden ist.

2. Ventilsystem nach Anspruch 1, **dadurch gekennzeichnet, dass** das System Mittel zum Messen der Position des Aktivators (17) und eine Einheit zum Verarbeiten von Daten umfasst, die zum Abschätzen des Flüssigkeitsstroms durch das Ventil auf der Basis der Position des Aktivators (17) umfasst.

3. Ventilsystem nach Anspruch 1 oder 2, **dadurch gekennzeichnet, dass** die programmierbare Reglereinheit (6) in der Lage ist, den Aktivator (17) bei mehreren verschiedenen Geschwindigkeiten zu beeinflussen, abhängig von der Größe des Abstandes, der zurückzulegen ist.

4. Ventilsystem nach Anspruch 1 bis 3, **dadurch gekennzeichnet, dass** das System Mittel zum Messen des Energieverbrauchs im Motor (20) und eine Einheit zur Verarbeitung von Daten umfasst, die dafür ausgelegt ist, die Kraft oder das Moment abzuschätzen, mit dem der Aktivator (17) beeinflusst wird.

5. Ventilsystem nach Anspruch 4, **dadurch gekennzeichnet, dass** die programmierbare Reglereinheit (6) das Moment auf der Basis des Energieverbrauchs im Motor (20) abgeschätzt.

6. Ventilsystem nach Anspruch 5, **dadurch gekennzeichnet, dass** das System einen Schalter umfasst, der das Stoppen des Motors (20) bewirkt, wenn abgeschätzt wird, dass die Kraft oder das Moment im Aktivator (17) einen Maximalwert übersteigt, der im Speicher der programmierbaren Reglereinheit (6) gespeichert ist.

7. Ventilsystem nach Anspruch 1 bis 5, **dadurch gekennzeichnet, dass** das System Mittel zum Messen der Temperatur in der programmierbaren Reglereinheit umfasst; und dadurch, dass das System einen Schalter umfasst, der abschaltet, wenn die Temperatur sich außerhalb eines Bereichs befindet, der im Speicher der programmierbaren Reglereinheit (6) gespeichert ist.

8. Ventilsystem nach Anspruch 1 bis 7, **dadurch gekennzeichnet, dass** ein Teil des Speichers der programmierbaren Reglereinheit (6) in einer elektrisch unabhängigen Einheit gespeichert ist, sodass Daten gespeichert und angesammelt werden.

9. Ventilsystem nach Anspruch 1 bis 8, **dadurch gekennzeichnet, dass** es eine Schnittstelle mit dem Effekt umfasst, dass die programmierbare Reglereinheit (6) über dieselbe programmiert werden kann.

10. Ventilsystem nach Anspruch 1 bis 9, **dadurch gekennzeichnet, dass** die programmierbare Reglereinheit (6) eine Schnittstelle in Form eines RFID-Systems oder eines Infrarotsystems umfasst, wobei eine Markierung, die in Verbindung mit einem Einsatz oder einem Ventilkörper (18) angeordnet ist, durch einen Antennenteil festgestellt wird, der in Verbindung mit der programmierbaren Reglereinheit (6) angeordnet ist, wodurch die programmierbare Reglereinheit (6) automatisch an den angeschlossenen Einsatz angepasst wird.

11. Ventilsystem nach Anspruch 1 bis 10, **dadurch gekennzeichnet, dass** der Ventilkörper (18) ein Verbindungsteil (51) mit zugehörigem Identifizierungsmittel umfasst; und dadurch, dass die programmierbare Reglereinheit (6) Mittel umfasst, die in der Lage sind, die Identifizierungsmittel zu lesen, wodurch die programmierbare Reglereinheit (6) automatisch an den angeschlossenen Einsatz angepasst wird.

12. Ventilsystem nach Anspruch 11, **dadurch gekennzeichnet, dass** die programmierbare Reglereinheit (6) und der Ventilkörper (18) miteinander über eine sogenannte Schnappkupplung verbunden werden können; und dass die Identifizierung durch mechanische Feststellung stattfindet, wann Teile miteinander verbunden sind oder verbunden gewesen sind.

## Revendications

1. Système de valve, en particulier pour contrôler l'écoulement de liquide dans une installation pour chauffage central, lequel système comprend : une ou plusieurs unités régulatrices programmables (6), des corps de valve (18) et divers inserts avec des caractéristiques d'écoulement différentes, lesdits corps de valve (18) sont fournis avec un desdits divers inserts, ledit un insert concerné ayant des caractéristiques d'écoulement spécifiques,
lesdits divers inserts comprenant deux types d'unités avec de ouvertures régulables (14, 15), lesdites unités étant fournies avec des moyens pour réguler l'écoulement de liquide, un changement appliqué dans la surface des ouvertures d'une unité apportant un changement dans la pression différentielle sur les ouvertures de cette unité, moyennant quoi la surface des ouvertures de l'autre unité est changée en réponse à celle-ci, lesdits divers inserts étant de plus fournis avec des moyens pour le changement appliqué de la surface au moyen d'un activateur (17) qui comprend une extrémité qui est exposé aux environnements,
lesdites une ou plusieurs unités régulatrices programmables étant fournies avec un moteur (20) et comprenant des moyens de couplage (50) adaptés aux moyens de couplage complémentaires (51) sur les corps de valve (18) à l'effet que le moteur (20) de l'une ou de plusieurs unités régulatrices programmables (6) est couplé à l'extrémité de l'activateur (17) sur l'insert concerné, lesdites une ou plusieurs unités régulatrices programmables (6) étant programmées pour réguler l'activateur (17) dépendant de et en accord avec les caractéristiques d'écoulement spécifiques dudit un insert concerné et ainsi l'écoulement de liquide à travers le corps de valve couplé à l'unité régulatrice programmable (6).

2. Système de valve selon la revendication 1, **caractérisé en ce que** le système comprend des moyens pour mesurer la position de l'activateur (17) et une unité pour les données de traitement configurée pour estimer l'écoulement de liquide à travers la valve basée sur la position de l'activateur.

3. Système de valve selon les revendications 1 ou 2, **caractérisé en ce que** l'unité régulatrice programmable (6) est capable d'influencer l'activateur (17) à plusieurs vitesses différentes selon l'ampleur de la distance qu'il doit parcourir.

4. Système de valve selon les revendications 1 à 3, **caractérisé en ce que** le système comprend des moyens pour mesurer la consommation de puissance dans le moteur (20) et une unité pour les données de traitement configurée pour estimer la force ou le moment par lequel l'activateur (17) est influencé.

5. Système de valve selon la revendication 4, **caractérisé en ce que** l'unité régulatrice programmable (6) estime le moment sur la base de la consommation de puissance dans le moteur (20).

6. Système de valve selon la revendication 5, **caractérisé en ce que** le système comprend un commutateur entraînant le moteur (20) à à s'arrêter quand la force ou le moment dans l'activateur (17) est estimé dépasser une valeur maximum stockée dans la mémoire de l'unité régulatrice programmable (6).

7. Système de valve selon les revendications 1 à 5, **caractérisé en ce que** le système comprend des moyens pour mesurer la température dans l'unité régulatrice programmable ; et **en ce que** le système comprend un commutateur qui s'éteint quand la température est hors d'une plage stockée dans la mémoire de l'unité régulatrice programmable (6).

8. Système de valve selon les revendications 1 à 7, **caractérisé en ce qu'**une partie de la mémoire de l'unité régulatrice programmable (6) est stockée sur une unité électriquement indépendante de sorte que les données sont stockées et accumulées.

9. Système de valve selon les revendications 1 à 8, **caractérisé en ce qu'**il comprend une interface ayant pour effet que l'unité régulatrice programmable (6) peut être programmée via celle-ci.

10. Système de valve selon le revendications 1 à 9, **caractérisé en ce que** l'unité régulatrice programmable (6) comprend une interface sous la forme d'un système RFID ou d'un système infrarouge, où une étiquette disposée en association avec un insert ou un corps de valve (18) est détectée par une partie d'antenne disposée en association avec l'unité régulatrice programmable (6), moyennant quoi l'unité régulatrice programmable (6) est ajustée automatiquement à l'insert couplé.

11. Système de valve selon les revendications 1 à 10, **caractérisé en ce que** le corps de valve (18) comprend une partie de couplage (51) avec des moyen d'identification associés ; et **en ce que** la partie régulatrice programmable (6) comprend des moyens capables de lire les moyens d'identification, moyennant quoi l'unité régulatrice programmable est ajustée automatiquement à l'insert couplé.

12. Système de valve selon la revendication 11, **caractérisé en ce que** l'unité régulatrice programmable (6) et le corps de valve (18) peuvent être interconnectés via un dénommé moyen d'accouplement ; et que l'identification a lieu par détection mécanique ou quand les parties sont interconnectées ou ont été interconnectées.
